# DEMANDE DE BREVET EUROPEEN

(11) **EP 1 086 881 A1**
(43) Date de publication de la demande: **28.03.2001**
(21) Numéro de dépôt: 00402470.9
(22) Date de dépôt: 08.09.2000
(51) Int. Cl.: B62D 3/12

(54) **Carter pour mécanisme de direction à pignon et crémaillère**

(30) Priorité: 24.09.1999 FR 9911933
(71) Demandeur: Renault, 92100 Boulogne Billancourt (FR)
(72) Inventeur: Guesnon, Michel, 92100 Boulogne-Billancourt (FR)

(57) **Abrégé**

1) Carter pour direction à crémaillère (2) et pignon (3), moulé en matériau plastique et comprenant en communication un alésage longitudinal (11) pour recevoir la crémaillère (2) et un logement transversal pour recevoir le pignon (3), ladite crémaillère (2) étant guidée à une extrémité du carter par un palier (5) et maintenu, à l'autre extrémité, au contact du pignon (3) par des moyens d'appui, caractérisé en ce que lesdits moyens d'appui sont constitués par une butée (7,9) interposée entre le pignon (3) et le palier (5) d'extrémité, ladite butée (7,9) étant fixe transversalement à la crémaillère (2) et coupant légèrement la trajectoire de la crémaillère (2) de manière à être en appui sous contrainte contre la crémaillère (2), générant un léger effort transversal sur la crémaillère (2) en direction du pignon (3) lorsque cette dernière est engrenée.

## Description

La présente invention concerne un carter pour mécanisme de direction à pignon et crémaillère, en particulier pour véhicule automobile.

Les carters pour mécanisme de direction à pignon et crémaillère connus, notamment décrit dans la publication FR 2.335.386, comportent un logement longitudinal et un logement transversal qui communiquent entre eux. Le logement transversal reçoit un pignon monté en rotation au niveau de l'intersection avec le logement longitudinal. Le logement longitudinal reçoit une crémaillère montée de façon coulissante et en prise avec le pignon.

Les carters pour mécanisme de direction à pignon et crémaillère sont de plus adaptés pour recevoir des moyens destinés à assurer une liaison pignon-crémaillère en toute circonstance. En effet, pour obtenir un fonctionnement satisfaisant d'un mécanisme de direction à pignon crémaillère, sans vibration désagréable pour le conducteur, il est nécessaire de maintenir le pignon et la crémaillère en engrènement.

Cet engrènement doit avoir lieu nonobstant l'usure du pignon ou de la crémaillère, les jeux d'usinage entre ces organes, ainsi que la déformation en fonctionnement de la crémaillère soumise aux efforts engendrés par les irrégularités de la route.

Il a été proposé de nombreux dispositifs maintenant la crémaillère en engrènement avec le pignon. Ces dispositifs sont principalement de type poussoir comme décrit dans la publication FR 2 107 780. Ces dispositifs comprennent des moyens élastiques qui pressent la crémaillère contre le pignon par l'intermédiaire d'un poussoir. La pression des moyens élastiques doit être soigneusement réglée pour ne pas rendre trop difficile la manoeuvre de la direction.

Toutefois, de tels dispositifs présentent l'inconvénient d'augmenter l'encombrement du carter de direction par la présence d'une excroissance pour l'intégration du poussoir, qui peut être préjudiciable à l'implantation de la direction dans le véhicule. Par ailleurs, le poussoir est réglé en usine et ne fait pratiquement jamais l'objet d'un réglage en après vente, malgré l'usure du dispositif, car les moyens de réglage de précision nécessaires au tarage du poussoir n'existent pas chez les garages des différentes marques automobiles. Il s'ensuit que les moyens de réglage du poussoir s'avèrent inutiles en après vente puisque non utilisés.

Le but de la présente invention est donc de proposer un carter pour mécanisme de direction à pignon et crémaillère de type nouveau, qui assure une mise sous pression de la crémaillère contre le pignon sans augmenter l'encombrement du carter de direction et qui soit simple et économique à réaliser.

A cet effet, l'invention concerne un carter pour direction à crémaillère et pignon, moulé en matériau plastique et comprenant en communication un alésage longitudinal pour recevoir la crémaillère et un logement transversal pour recevoir le pignon, la crémaillère étant guidée à une extrémité du carter par un palier et maintenue, à l'autre extrémité, au contact du pignon par des moyens d'appui.

Selon une caractéristique de l'invention, les moyens d'appui sont constitués par une butée interposée entre le pignon et le palier d'extrémité, la butée étant fixe transversalement à la crémaillère et coupant légèrement la trajectoire de la crémaillère de manière à être en appui sous contrainte contre la crémaillère, générant un léger effort transversal sur la crémaillère en direction du pignon lorsque cette dernière est engrenée.

Selon une autre caractéristique de la présente invention, la butée est placée en opposition au pignon en étant décalée par rapport à ce dernier, en direction du palier, d'une distance adaptée pour favoriser la flexion de la crémaillère afin d'absorber les petits chocs tout en assurant une bonne pression de contact de la crémaillère sur le pignon.

Selon une autre caractéristique de la présente invention, la butée est réalisée dans un matériau polymère présentant une certaine souplesse de façon à favoriser l'absorption des chocs au niveau du contact pignon/crémaillère.

Selon une autre caractéristique de la présente invention, la butée est formée par un patin monté dans un logement transversal du carter, le patin comportant une extrémité munie d'une section épousant localement le contour du bord de la crémaillère opposé aux dents et présentant une surface d'appui incurvée suivant l'axe longitudinal de l'alésage autorisant la flexion de la crémaillère.

Selon une autre caractéristique de la présente invention, la butée est formée par un galet rotatif monté autour d'un axe porté par le carter de direction, l'axe étant disposé perpendiculairement à l'axe de l'alésage de manière à ce que la crémaillère puisse rouler librement sur le galet.

Selon une autre caractéristique de la présente invention, l'écran galet possède la forme d'un diabolo venant épouser la surface extérieure du bord de la crémaillère opposé au dents.

Selon une autre caractéristique de la présente invention, ledit galet est disposé dans un logement du carter présentant une ouverture vers l'extérieur, ladite ouverture étant fermée par une capsule d'étanchéité.

Selon une autre caractéristique de la présente invention, ledit carter comporte, en regard du pignon, des surfaces faisant saillie à l'intérieur de l'alésage du carter, ces surfaces formant butée étant destinées à être en contact direct avec la crémaillère lorsque cette dernière est soumise à des chocs.

D'autres caractéristiques et avantages de l'invention apparaîtront à la lecture de la description de deux exemples de réalisation du carter de direction en référence aux dessins annexés dans lesquels :
- la figure 1 est une vue en coupe longitudinale d'un premier mode de réalisation du carter de direction selon l'invention ;
- la figure 2 est une vue en coupe partielle agrandie du carter de direction de la figure 1 ;
- la figure 3 est une vue en coupe selon la ligne III-III de la figure 2 ;
- la figure 4 est une vue coupe partielle d'un second mode de réalisation du carter de direction selon l'invention ;
- la figure 5 est une vue en coupe selon la ligne V-V de la figure 4.

Pour faciliter la lecture des dessins, les mêmes pièces portent les mêmes références d'une figure à l'autre. Par ailleurs, seuls les éléments nécessaires à la compréhension de l'invention ont été figurés.

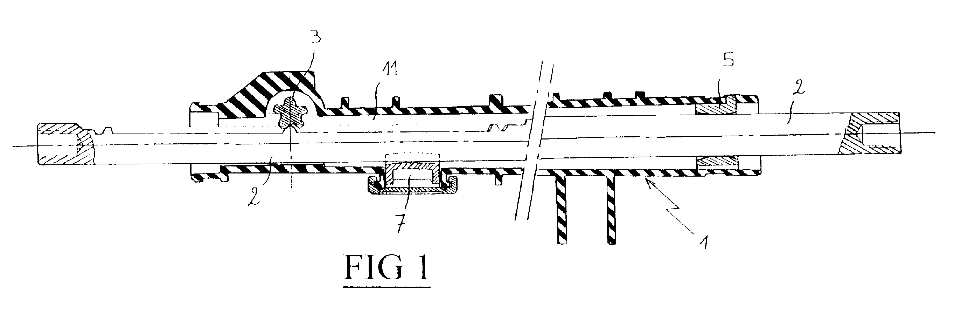

La figure 1 représente un carter de direction comprenant un corps 1 moulé en matière plastique tel qu'un polyamide chargé de fibres de verre.

Le corps 1 possède un alésage longitudinal intérieur 11 dans lequel une crémaillère 2 cylindrique est montée en translation sous l'action d'un pignon de commande 3. La crémaillère 2 est guidée à une extrémité du corps 1 par un palier 5 et est maintenue au contact du pignon 3, à son autre extrémité, au moyen d'une butée 7 prenant appui contre le dos de la crémaillère 2 dans l'intervalle séparant le palier 5 du pignon 3.

La butée d'appui 7 est constituée d'un patin monté par l'intérieur de l'alésage 11, dans un logement 10 transversal débouchant dans l'alésage 11 du côté opposé aux dents de la crémaillère 2. Le patin 7 comporte une semelle 7a s'intercalant entre le corps 1 du carter et la crémaillère 2 et possédant une épaisseur adaptée pour que la face du patin 7 au contact de la crémaillère 2 soit en appui sous contrainte contre le dos de la crémaillère 2. Une capsule d'étanchéité 8 est emmanchée sur la surface extérieure du logement 10 pour fermer ce dernier et est maintenue sur le corps 1 au moyen d'une gorge coopérant avec un collet réalisé sur la surface extérieure du logement 10.

La position longitudinale du logement 10 du patin 7 sur le corps 1 du carter et la hauteur en saillie du patin 7 à l'intérieur de l'alésage 11 est calculée en fonction des caractéristiques à la flexion de la crémaillère 2 pour assurer une pression de la crémaillère 2 sur le pignon 3 en toute circonstance sans générer de dureté dans la direction. Dans le mode de réalisation représenté à la figure 1, le logement 10 est décalé par rapport à l'axe du pignon 3 de quelques centimètres en direction du palier 5 d'extrémité de manière à générer une faible flexion de la crémaillère au niveau du pignon 3.

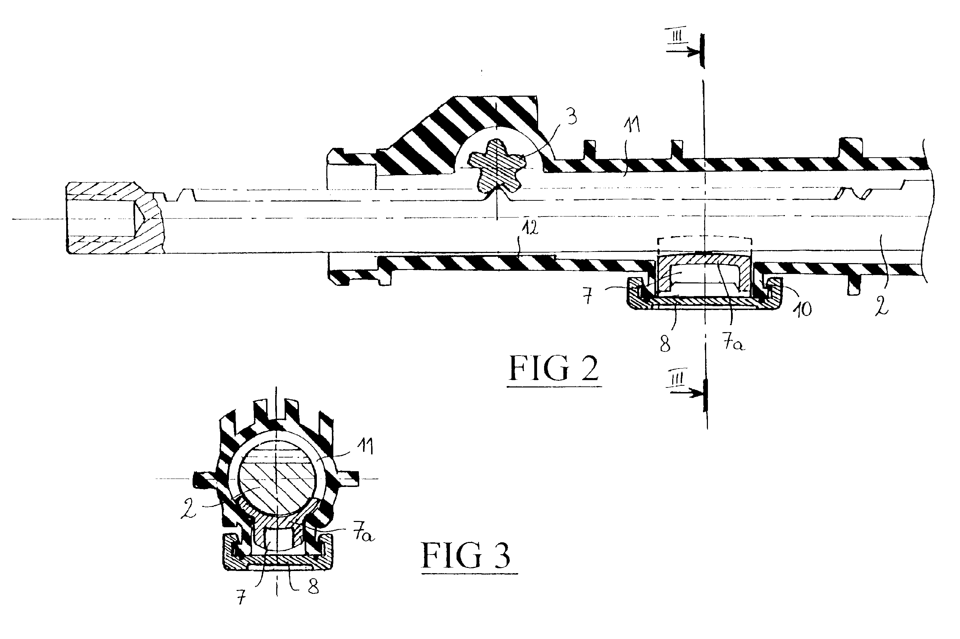

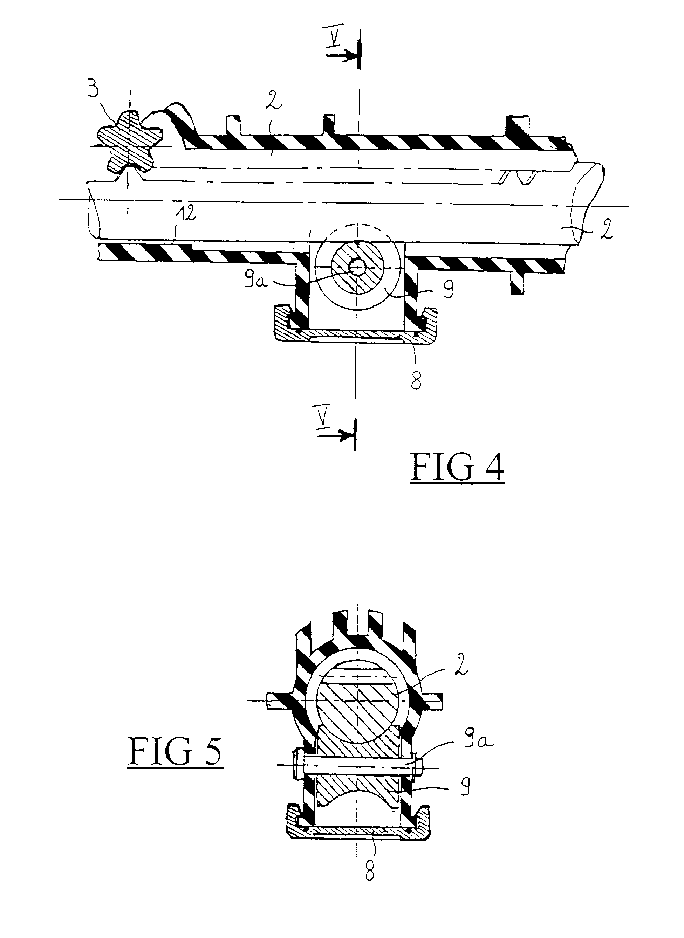

Conformément aux figures 2 et 3, le patin 7 et le palier 5 possèdent une section longitudinale au contact de la crémaillère 2 incurvée, autorisant la flexion de la crémaillère 2 et une section transversale épousant le contour de la crémaillère 2 de manière à guider cette dernière transversalement. Dans un mode de réalisation préférentiel de l'invention, le patin 7 est réalisé dans un polymère assurant un faible effort de frottement entre la crémaillère 2 et le patin 7 et possédant de bonnes propriétés anti-usure ainsi qu'une certaine élasticité, donnant de la souplesse au niveau du contact crémaillère/pignon.

Avantageusement, le corps 1 du carter de direction possède, en regard du pignon 3, des portées 12 longitudinales parallèles en excroissance à l'intérieur de l'alésage 11, et situées de part et d'autre du plan de symétrie P de la crémaillère 2 perpendiculaire à l'axe du pignon 3, afin de limiter le débattement de la crémaillère 2 en face du pignon 3 lors de chocs importants.

Les figures 4 et 5 présentent une variante de réalisation du carter de direction selon l'invention dans laquelle la butée d'appui est réalisée par un galet rotatif 9. Le corps 1 du carter de direction dans son ensemble est similaire à celui décrit pour le mode de réalisation précédent et seul le logement 10 transversal diffère de celui décrit précédemment par sa hauteur plus importante permettant la réception du galet 9 rotatif. Le logement 10 comporte également un alésage pour le maintien de l'axe 9a du galet 9.

Conformément à la figure 5, le galet 9 possède une forme de diabolo dont la surface extérieure épouse localement la forme cylindrique du dos de la crémaillère 2 assurant un excellent guidage de cette dernière. Une telle variante de réalisation présente l'avantage de limiter les efforts de frottement entre la crémaillère 2 et la butée d'appui 7 et donc d'améliorer la coulissement de la crémaillère 2 à l'intérieur du carter de direction.

Les carters de direction ainsi réalisés présentent l'avantage d'assurer à faible coût un excellent engrènement pignon/crémaillère en toute circonstance et ce sans nécessiter un mécanisme coûteux et encombrant de type poussoir à ressort.

En effet, la butée d'appui intercalée entre le pignon et le palier d'extrémité assure un maintien sous pression de la crémaillère contre le pignon garantissant un engrènement constant du pignon sur la crémaillère permettant d'absorber l'usure du mécanisme, et la flexibilité de la crémaillère ainsi que la souplesse de la matière dont est constitué la butée d'appui permet d'absorber la déformation en fonctionnement de la crémaillère lorsque celle-ci est soumise aux efforts engendrés par les irrégularités de la route. Par ailleurs, la pression de contact entre la crémaillère et le pignon, qui est déterminée par la distance entre le point de contact pignon/crémaillère et le point d'appui du patin par rapport au palier d'extrémité ainsi que par la position plus ou moins avancée du patin à l'intérieur de l'alésage du corps du carter, peut être facilement fixée par construction.

Le mécanisme de direction ainsi réalisé présente également l'avantage d'avoir un très faible encombrement ainsi qu'un poids réduit.

Bien entendu, l'invention n'est nullement limitée aux modes de réalisation décrits et illustrés qui n'ont été donné qu'à titre d'exemple.

## Revendications

1. Carter pour direction à crémaillère (2) et pignon (3), moulé en matériau plastique et comprenant en communication un alésage longitudinal (11) pour recevoir la crémaillère (2) et un logement transversal pour recevoir le pignon (3), ladite crémaillère (2) étant guidée à une extrémité du carter par un palier (5) et maintenue, à l'autre extrémité, au contact du pignon (3) par des moyens d'appui, caractérisé en ce que lesdits moyens d'appui sont constitués par une butée (7,9) interposée entre le pignon (3) et le palier (5) d'extrémité, ladite butée (7,9) étant fixe transversalement par rapport à la crémaillère (2) et au carter, et coupant légèrement la trajectoire de la crémaillère (2) de manière à être en appui sous contrainte contre la crémaillère (2), générant un léger effort transversal sur la crémaillère (2) en direction du pignon (3) lorsque cette dernière est engrenée.

2. Carter pour direction selon la revendication 1, caractérisé en ce que ladite butée (7,9) est placée en opposition au pignon (3) en étant décalée par rapport à ce dernier, en direction du palier (5), d'une distance adaptée pour favoriser la flexion de la crémaillère (2) afin d'absorber les petits chocs tout en assurant une bonne pression de contact de la crémaillère (2) sur le pignon (3).

3. Carter pour direction selon la revendication précédente, caractérisé en ce que ladite butée (7,9) est réalisée dans un matériau polymère présentant une certaine souplesse de façon à favoriser l'absorption des chocs au niveau du contact pignon (3)/crémaillère (2).

4. Carter pour direction selon l'une quelconque des revendications 2 à 3, caractérisé en ce que ladite butée est formée par un patin (7) monté dans un logement (10) transversal du carter, ledit patin (7) comportant une extrémité munie d'une section épousant localement le contour du bord de la crémaillère (2) opposé aux dents et présentant une surface d'appui incurvée suivant l'axe longitudinal de l'alésage (11) autorisant la flexion de la crémaillère (2).

5. Carter pour direction selon l'une quelconque des revendications 2 à 3, caractérisé en ce que ladite butée est formée par un galet rotatif (9) monté autour d'un axe (9a) porté par le carter de direction, ledit axe (9a) étant disposé perpendiculairement à l'axe de l'alésage (11) de manière à ce que la crémaillère (2) puisse rouler librement sur ledit galet (9).

6. Carter de direction selon la revendication précédente, caractérisé en ce que ledit galet (9) possède la forme d'un diabolo venant épouser la surface extérieure du bord de la crémaillère (2) opposé au dents.

7. Carter de direction suivant la revendication précédente, caractérisé en ce que ledit galet (9) est disposé dans un logement (10) du carter présentant une ouverture vers l'extérieur, ladite ouverture étant fermée par une capsule d'étanchéité (8).

8. Carter pour direction à crémaillère et pignon selon l'une quelconque des revendications 1 à 7, caractérisé en ce que ledit carter comporte, en regard du pignon, des surfaces d'appui (12) faisant saillie à l'intérieur de l'alésage (11) du carter, ces surfaces (12) formant butée étant destinées à être en contact direct avec la crémaillère (2) lorsque cette dernière est soumise à des chocs.
